# EUROPÄISCHE PATENTSCHRIFT

(11) **EP 1 339 598 B1**
(45) Veröffentlichungstag und Bekanntmachung des Hinweises auf die Patenterteilung: **27.04.2005**
(21) Anmeldenummer: 01999505.9
(22) Anmeldetag: 07.12.2001
(51) Int. Cl.: B62D 21/15, B62D 65/00, B62D 25/08

(54) **HECKMODUL FÜR PERSONENKRAFTFAHRZEUGE**
REAR END MODULE FOR PASSENGER MOTOR VEHICLES
MODULE ARRIERE POUR VOITURES DE TOURISME

(30) Priorität: 07.12.2000 DE 10060784
(43) Veröffentlichungstag der Anmeldung: 03.09.2003
(73) Patentinhaber: ISE Innomotive Systems Europe GmbH, 51702 Bergneustadt (DE); DaimlerChrysler AG, 70567 Stuttgart (DE)
(72) Erfinder: ENGELS, Frank, 57489 Drolshagen (DE); BÜNING, Friedhelm, 57489 Drolshagen (DE); BAUMANN, Karl-Heinz, 71149 Bondorf (DE); RATHJE, Klaus, 71157 Hildrizhausen (DE)
(74) Vertreter: Fuchs Mehler Weiss & Fritzsche
(86) Internationale Anmeldenummer: PCT/EP2001/014361
(87) Internationale Veröffentlichungsnummer: WO 2002/046026

(56) Entgegenhaltungen:
- EP-A- 0 810 148
- EP-A- 1 127 777
- DE-A- 19 913 532
- FR-A- 1 231 040
- US-A- 4 900 083

## Beschreibung

Die Erfindung betrifft ein Heckmodul für Personenkraftfahrzeuge, deren Karosserie zwei Längsträger und ein Heck mit einem Heckmittelstück aufweist, mit einem Stoßfängerbiegeträger, der über Deformationselemente zur Energieabsorption im Bereich der hinteren Längsträger an die FahrzeugKarosserie schraubbar ist.

Der Kostendruck beim Automobilbau generell, verbunden mit der Notwendigkeit einer wirtschaftlichen Fertigung, hat Überlegungen zu einer modularen Bauweise der Kraftfahrzeuge angestoßen. Bei dieser Bauweise werden bestimmte Komponenten eines Fahrzeuges von Zulieferanten komplett zusammengebaut, um dann als Modul zusammen mit anderen Modulen zu einem kompletten Fahrzeug beim Fahrzeughersteller zusammengebaut zu werden, beispielsweise gemäß der DE 38 09 456 A1 mittels Schraubverbindungen. Diese Fertigungskonzeption folgt dem Trend, vermehrt Montagearbeiten auf den Zulieferer zu verlagern, auch damit möglichst geringe Lagerkapazitäten beim Fahrzeughersteller bereitgestellt werden müssen. Die vorgenannte Schrift beschreibt auch einen Heckmodul, der aus einem hinteren Endverkleidungsteil, dem Heckblech, das Montageöffnungen für die Kombinations-Heckleuchten besitzt, und dem getrennt montierbaren Stoßfänger, besteht.

Eine modulare Bauweise eines Kraftfahrzeuges zeigt auch die DE 196 21 451 A1.

Diese Schrift beschreibt drei typische Module eines Kraftfahrzeuges. Der erste Modul umfaßt den gesamten Frontbereich. Der zweite Modul den Fahrgastraum inklusive Front- und Heckscheibe, einschließlich zwei angeformte hintere Außenkotflügel, zwischen denen ein dritter Modul, der Heckmodul, von hinten und oben beim Zusammenbau des Fahrzeuges im Fahrzeug-Herstellerwerk dichtend eingeschoben wird. Dieser Heckmodul umfaßt den gesamten Kofferraum mit Bodenteil und ggf. einer Bodenwanne für das Ersatzrad, sowie gegenüberliegend den Außenkotflügeln Seitenwände, an denen die Heckleuchten angebracht sind, und die vordere sowie hintere Abschlußwand des Kofferraumes. Auch der Heck-Stoßfänger, bestehend aus dem an den beiden Längsträgern angeschraubten Stoßfänger-Biegeträger und dessen Abdeckung, ist Teil des Heckmoduls.

Neben der modularen Bauweise für die Wirtschaftlichkeit der Fertigung der Fahrzeuge kommt der Reparaturfreundlichkeit der Module wegen der Einstufung in Versicherungstarife eine erhebliche Bedeutung bei. Sind die Module beispielsweise zu groß, d.h. umfassen zu viele Komponenten, dann muß bei einem Crash der gesamte Modul ausgetauscht werden, was bei leichten Unfällen zu einer unwirtschaftlichen Reparatur führt.

Reparaturen an Fahrzeugen mit leichteren bis mittleren Auffahrunfällen werden daher heutzutage im Bereich der Vorderwagenschäden durch relativ kleine Front-Module wesentlich erleichtert, bei denen der Vorderwagen in verschraubbare Komponenten aufgeteilt ist, in
- eine die Leuchteinheiten, Kühler, Motorhaubenschloß sowie diverse Agregate tragende Frontstruktur,
- eine primäre Struktur zum gezieltem Abbau der Energie, und
- eine Außenhülle, beispielsweise eine Stoßfängerschürze,
wobei auch die Frontstruktur und die Außenhülle zur Energieabsorption beitragen.

Aufgrund der durch Schraubmontage austauschbaren Komponenten verringern sich kostenintensive Schweiß- und Richtarbeiten, so daß die Versicherungen diese Fahrzeuge in niedrigere Vollkaskotarife einstufen.

Bei den Heckstrukturen werden derzeit in der Praxis nur kleine Module zum gezielten Abbau der Energie eingesetzt. Dieser Heckmodul umfaßt kleine Deformationselemente zur Energieabsorption, sogenannte "Crash-Boxen", die praktisch Teil der hinteren Längsträger sind, sowie den Stoßfängerbiegeträger, der typischerweise stoßfängerartig verkleidet ist, und die Crash-Boxen nach hinten abschließt. Dieser Heckmodul ist im Bereich der hinteren Längsträger an die Karosserie geschraubt.

Ein derartiges Heckmodul zeigt beispielsweise die DE 198 31 708 A1. Ein Heckmodul entsprechend dem Oberbegriff des Anspruchs 1 zeigt die DE-A-199 13 532. Von einem derartigen Heckmodul geht die Erfindung aus.

Das sogenannte Heckmittelstück der Rohbaustruktur und andere Heckkomponenten ragen in Fahrzeuglängsrichtung im Bereich des Heckmittelstücks allerdings aus Platzgründen deutlich über die Anschraubflächen eines derartigen Heckmoduls hinaus und unterbinden dadurch eine alleinige Energieabsorption durch die Crash-Boxen. Bei Heckstößen wird daher zwar die Längsträgerstruktur durch das schraubbare Heckmodul schadensfrei gehalten, das Heckmittelstück selbst wird jedoch aufgrund seiner exponierten Lage bereits frühzeitig deformiert.

Es entstehen daher trotz verschraubbarem Heckmodul unerwünschte Karosserieschäden, die aufwendig instandgesetzt werden müssen und die der Versicherungseinstufung schaden.

Der Erfindung liegt die Aufgabe zugrunde, den eingangs bezeichneten Heckmodul so auszubilden, daß eine wirtschaftliche Reparatur auch bei deutlich größeren Deformationstiefen als durch die Crash-Boxen vorgegeben, erzielbar ist.

Die Lösung dieser Aufgabe gelingt mittels eines Heckmoduls für Personenkraftfahrzeuge nach dem Anspruch 1.

Bei dem erfindungsgemäßen Heckmodul ist daher durch die Integration des Heckmittelstückes der Umfang der auswechselbaren Schraubteile deutlich erweitert. Die Schraubstellen des Gesamt-Heckmoduls zur Karosserie sind nunmehr im Bereich des Heckleuchten-Rahmens, an den hinteren Längsträgern und im Bereich der Heckseitenteile angeordnet.

Der erfindungsgemäße Heckmodul besitzt folgende Vorteile:
- Schäden treten bei Heckstößen nur in Schraubteilen auch bei deutlich größeren Deformationstiefen als bisher auf.
- Niedrigere Kaskoeinstufung durch die Versicherungen.
- Bei Stahlkarosserien kann durch eine Verwendung eines anderen Werkstoffes, z.B. Aluminium, für den Heckmodul bzw. seine Unter-Module, eine Gewichtsreduzierung erzielt werden.
- Das Modul muß nicht in der Wagenfarbe lackiert sein.
- Den einzelnen Fahrzeugvarianten Limousine, Coupé, Kombi kann durch unterschiedliche Module Rechnung getragen werden.

Gemäß einer Ausgestaltung der Erfindung ist das Heckmodul als Vormontageeinheit mit vormontierten Fahrzeugkomponenten, wie Heckleuchten und Heckdeckel-Schloß, ausgebildet. Diese Ausgestaltung erlaubt eine wirtschaftliche Montage der Heckpartie des Fahrzeuges.

Gemäß einer Weiterbildung der Erfindung ist das erfindungsgemäße Heckmodul so aufgebaut, daß der Untermodul Heckmittelstück mit dem Untermodul Stoßfängerbiegeträger und Deformationselemente zu einem in Gänze wechselbaren Gesamt-Schraubmodul kombiniert ist.

Bei einem Heckschaden kann dann auf einfache Weise der Gesamt-Schraubmodul ausgewechselt werden.

Um zu verhindern, daß bei einem Unfallschaden, bei dem der Modul Stoßfängerbiegeträger und Deformationselemente zwar überlastet, das Heckmittelstück aber noch nicht beschädigt wurde, der Gesamtschaden durch das Gesamt-Schraub-Modul nicht größer wird, sieht eine andere Weiterbildung der Erfindung vor, daß der Untermodul Heckmittelstück und der Untermodul Stoßfängerbiegeträger und Deformationselemente als getrennt auswechselbare Schraubmodule ausgebildet sind.

Je nach Deformationstiefe können dann die Untermodule getrennt ausgewechselt werden.

Gemäß der Erfindung ist der Heckmodul zweckmäßig so ausgebildet, daß der Untermodul Heckmittelstück aus einem Teilmodul bestehend aus einem äußeren und einem inneren mittleren Heckabschlußteil und einem Teilmodul aus zwei sich jeweils an den Enden der mittleren Heckabschlußteile anschließenden Heckseitenteilen besteht, wobei die beiden Teilmodule Fortsätze und Lochleisten für eine Schraubverbindung der Teilmodule untereinander haben.

Dieses erlaubt eine kostengünstige Reparatur, weil bei einem Heckschaden mit großer Deformationstiefe nicht der gesamte Untermodul "Heckmittelstück" ausgewechselt werden muß. Bei einem seitlichen Heckstoß genügt es, das betreffende Heckseitenteil auszutauschen. Bei einem mittigen Heckstoß braucht ggf. nur der Teilmodul "Heckabschlußteil" ausgetauscht zu werden.

Eine günstige konstruktive Gestaltung dieser Weiterbildung ist gegeben, wenn die beiden Heckseitenteile zwei zueinander abgewinkelte Abschnitte besitzen, einen rückwärtigen Abschnitt und einen kotflügelseitigen Abschnitt, wobei der rückwärtige Abschnitt jeweils eine Lochleiste für die Schraubverbindung mit dem Teilmodul Heckabschlußteil und der kotflügelseitige Abschnitt eine Lochleiste für eine Schraubverbindung mit dem jeweiligen Kotflügel besitzt.

Die Teilmodule des Untermoduls "Heckmittelstück" sind dann auf einfache und karosseriegünstige Weise untereinander und dann als Untermodul mit der Karosserie verbindbar.

Um das Untermodul "Heckmittelstück" als vormontierbare Einheit auszubilden und weitere Karosserieteile einzusparen ist dieses Untermodul so ausgebildet, daß die Heckseitenteile Ausnehmungen für die Aufnahme der Heckleuchten haben, und daß das innere, mittlere Heckabschlußteil eine Aufnahme für das Kofferraumhaubenschloß besitzt.

Damit der hintere Stoßfänger nicht so weit von der Karosserie absteht und mehr in diese eingebettet ist, ist das Heckmodul vorzugsweise so ausgebildet daß das äußere, mittlere Heckabschlußteil einen nach innen abgewinkelten Abschnitt für die teilweise Aufnahme des Untermoduls Stoßfängerbiegeträger mit Deformationselementen sowie an beiden Enden jeweils eine Befestigungsfläche für eine Schraubverbindung mit den Längsträgern hat.

Materialmäßig können die Untermodule Preßteile aus Stahl- und/oder Aluminiumblech aus Geweichtsgründen aufweisen. Die materialmäßige Ausbildung kann auch so getroffen werden, daß die Untermodule teilweise Komponenten aus Kunststoff aufweisen.

Anhand der Beschreibung eines in den Zeichnungen dargestellten Ausführungsbeispieles wird die Erfindung näher beschrieben.

Es zeigen:

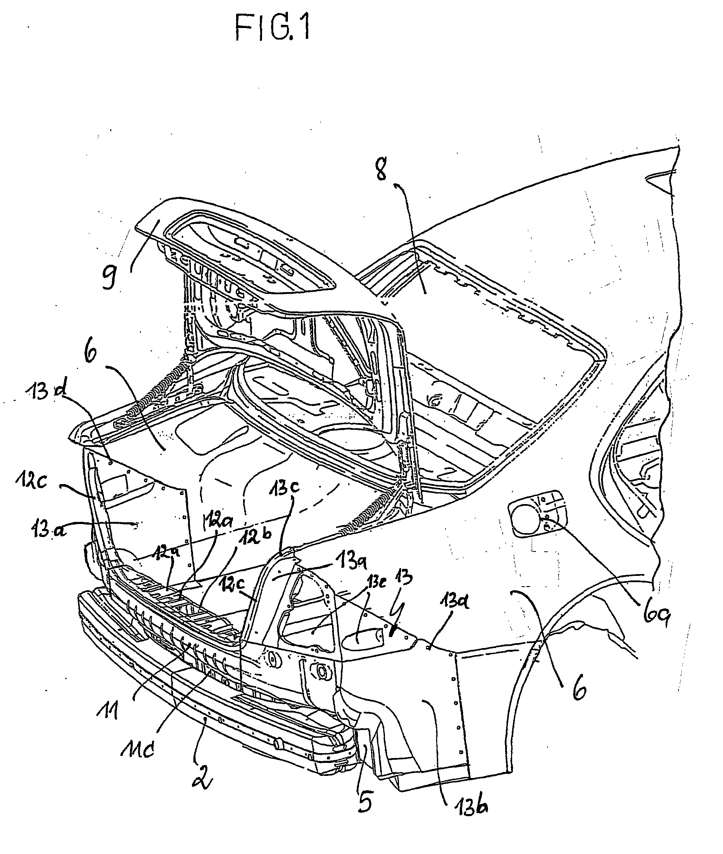

- Fig. 1: in einer perspektivischen Darstellung die Rohbau-Heckpartie eines Personenkraftfahrzeuges mit einer bevorzugten Ausführungsform des erfindungsgemäßen Heckmoduls im endmontierten Zustand,

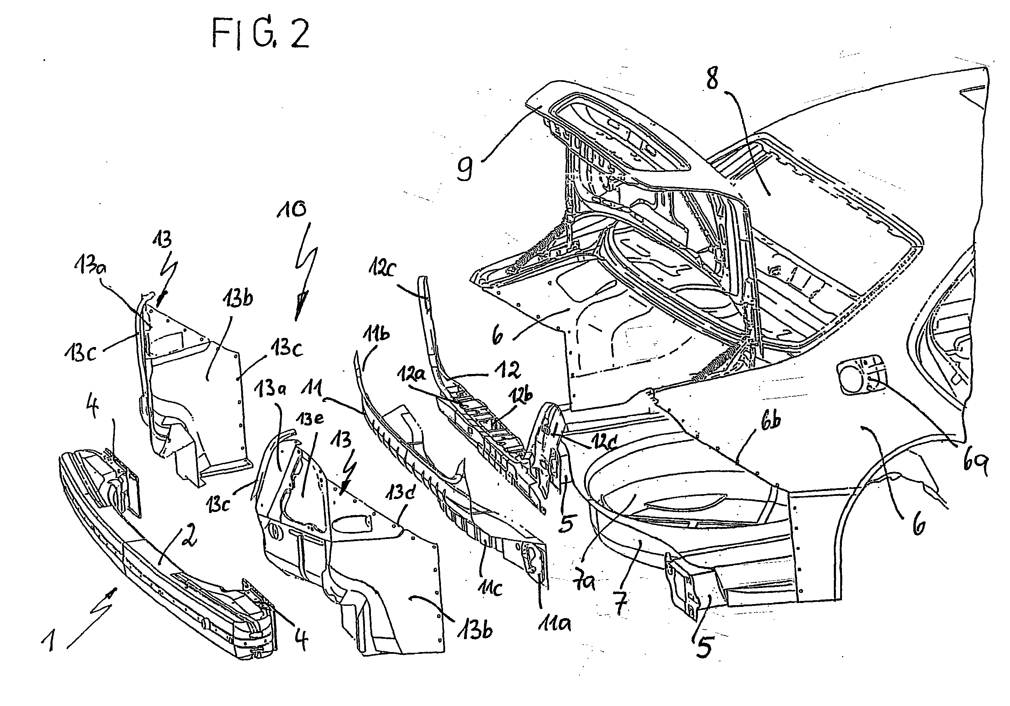

- Fig. 2: in einer Explosionsdarstellung die Untermodule und Teilmodule des Heckmoduls nach Fig. 1,
- Fig. 3: in einer vergrößerten Ausschnitt-Darstellung aus Fig. 1 den endmontierten Zustand des Heckmoduls,

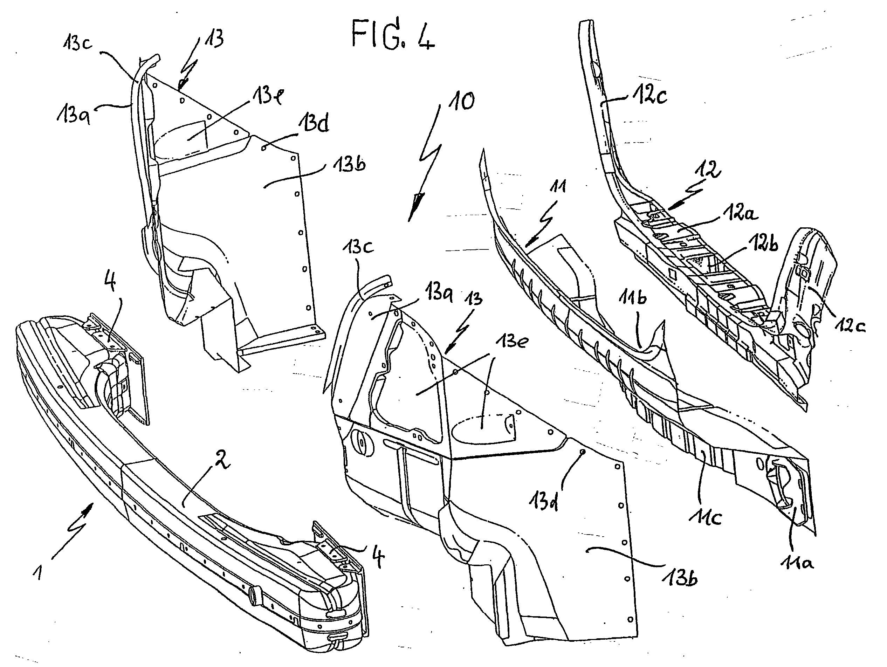

- Fig. 4: in einer Explosionsdarstellung analog Fig. 2 die Untermodule und Teilmodule des endmontierten Heckmoduls nach Fig. 3,

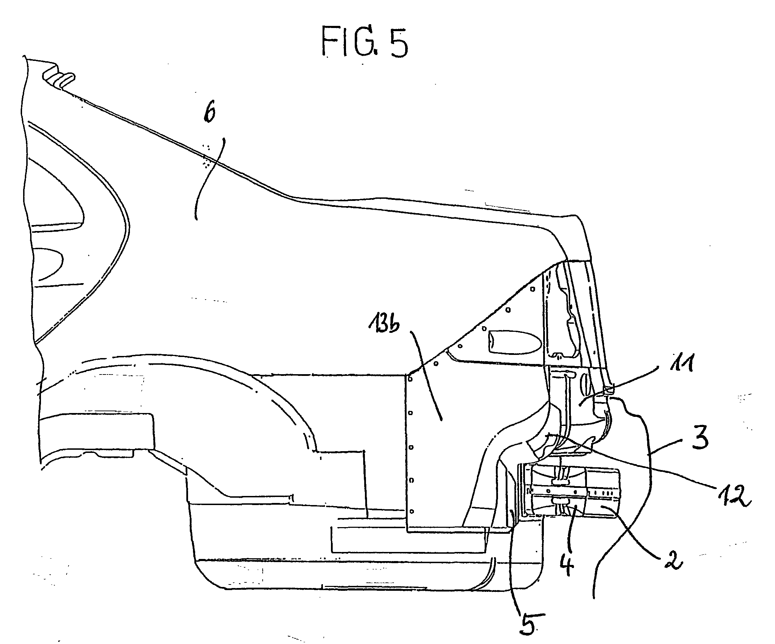

- Fig. 5: eine schematische Seitenansicht der Heckpartie nach Fig. 1 mit dem endmontierten Heckmodul,
- Fig. 6: in einer Seitenansichts-Explosionsdarstellung analog Fig. 2 die Untermodule und Teilmodule des Heckmoduls in Seitenansicht, und

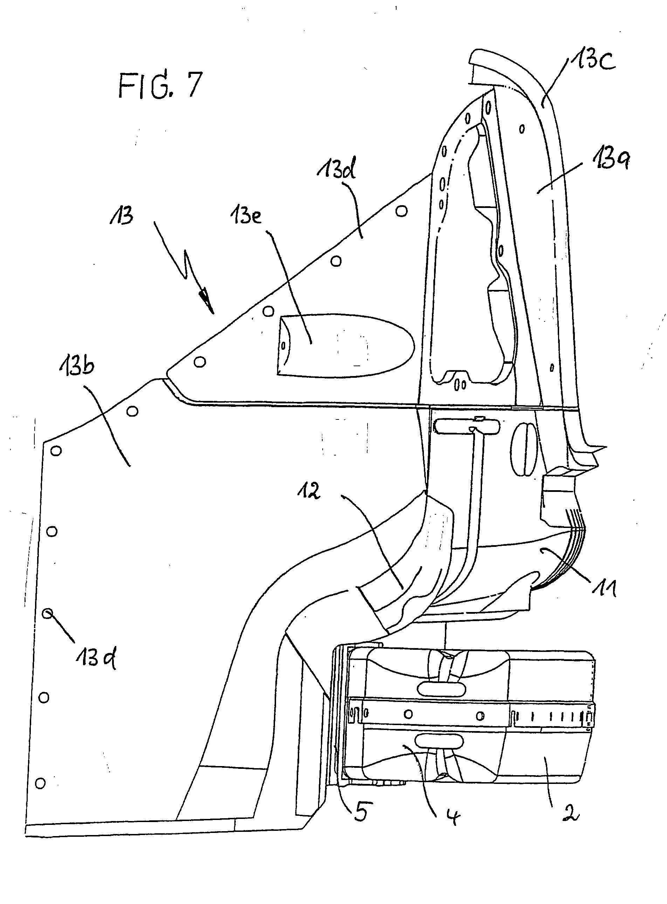

- Fig. 7: in einer vergrößerten Ausschnitt-Darstellung aus Fig. 5 den endmontierten Heckmodul in Seitenansicht.

Die Figuren der Patentzeichnungen zeigen in verschiedenen Darstellungsarten und Ansichten die Heckpartie eines Personenkraftwagens, die gemäß einer bevorzugten Ausführungsform der Erfindung modular aufgebaut ist.

An diesen modularen Aufbau der Heckpartie, den Heckmodule mit seinen Untermodulen, sind folgende generellen Anforderungen zu stellen:
- Schadensumfang muß beim Heckcrash deutlich geringer sein.
- Geringerer Gewichtseinsatz durch vermehrten Einsatz von Leichtmetall.
- Keine Einbußen an Karosseriesteifigkeit (statisch und dynamisch).
- Keine Einbußen bezüglich Betriebsfestigkeit.
- Trennstelle muß dicht sein.
- Einfache Montage.
- Potentiale für einfachere Montage der gesamten Einheit im Produktionsprozeß.
- Kosten/Nutzenverhältnis muß stimmen.

Die erfindungsgemäße Ausbildung des Heckmoduls erfüllt diese Forderungen.

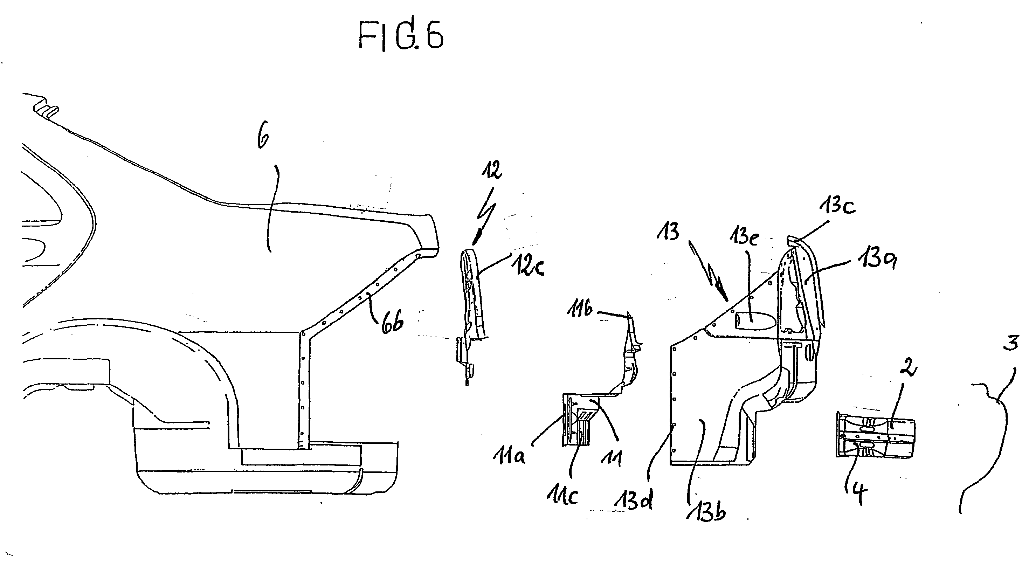

Die in den Figuren dargestellte Ausführungsform des erfindungsgemäßen Heckmoduls weist zunächst einen Untermodul 1 auf, der in an sich bekannter Weise aus einem Stoßfängerbiegeträger 2, welcher mittels eines Kunststoffteiles 3 (Fig. 6) stoßfängerartig verkleidet ist und aus am Stoßfängerbiegeträger 2 angebrachten elastisch nachgebenden Deformationselementen 4 besteht, die jeweils über Anschlußflansche an die beiden Längsträger 5 der selbsttragenden Karosserie angeschraubt sind. Von dieser Karosserie ist in den entsprechenden Darstellungen der Einfachheit halber nur die Heckpartie mit den Kotflügeln 6, und dem Tankeinfüllstutzen 6 a, dem Kofferraumboden 7 mit der Ersatzradmulde 7 a, dem Rückfenster 8 und der Kofferraum-Haube 9 gezeigt.

Der Untermodul "Heckmittelstück" 10 besteht aus mehreren Teilmodulen, dem äußeren Heckabschlußteil 11 mit dem inneren Heckabschlußteil 12, die bei metallischer Ausführung üblicherweise als Heckbleche bezeichnet werden, und zwei abgewinkelten Heckseitenteilen 13 als integrierte Seitenmulden, mit einem rückwärtigen Abschnitt 13 a und einem kotflügelseitigen Abschnitt 13 b. Diese Teilmodule bilden u.a. auch den rohbauseitigen hinteren Querträger.

Wie man aus den Zeichnungen generell erkennt, werden bei dem erfindungsgemäßen Heckmodul gegenüber dem bekannten Heckmodul, der lediglich aus dem Untermodul 1, dem Stoßfängerbiegeträger mit den Crash-Boxen, besteht, Teile der Karosserie des Heckmittelstückes, als weiterer Untermodul zugeordnet.

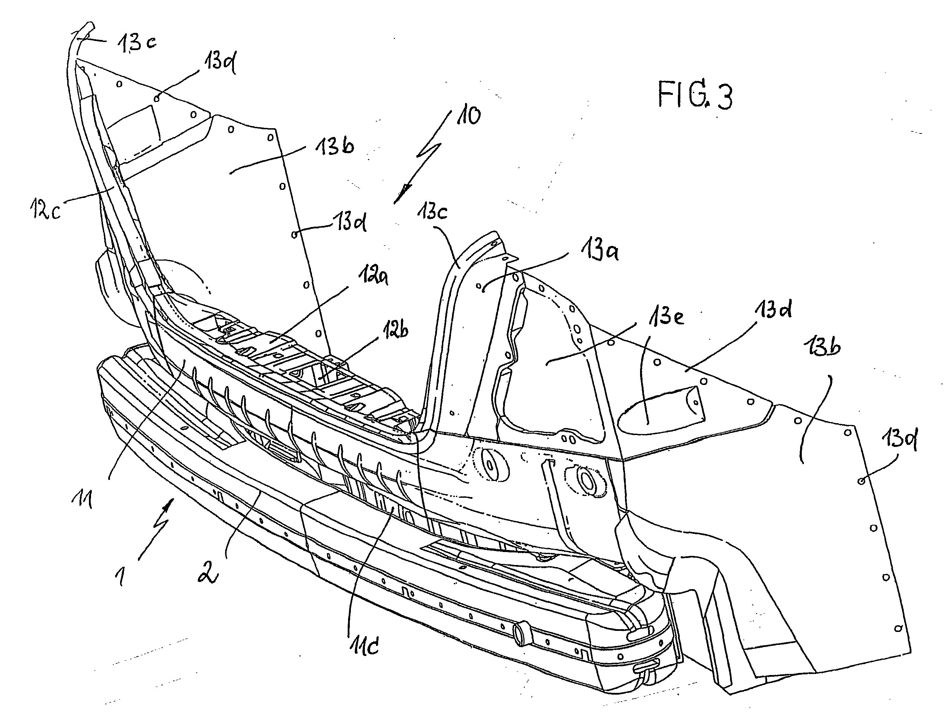

Das schürzenartige, abgewinkelte äußere Heckabschlußteil 11, weist an beiden Enden Verschraubflächen 11 a für eine Schraubverbindung an die Längsträger 5 zusammen mit dem Stoßfängermodul 1 auf und besitzt an der oberen Kante 11 b eine Rille zur Aufnahme des Dichtungsprofils für die Abdichtung der Kofferraumhaube 9. Der untere abgewinkelte Abschnitt 11 c schafft Bauraum zur teilweisen Aufnahme des Stoßfängermoduls 1 (Fig. 3). Das innere Heckabschlußteil weist eine obere Abstellfläche 12 a im Rahmen des Beladens des Kofferraumes sowie eine Aufnahme 12 b für das Kofferraumhauben-Schloß auf. Es besitzt an beiden Enden hochstehende flanschartige Verbindungsabschnitte 12 c für eine Schraubverbindung mit den Heckseitenteilen 13, und weist ferner eine rillenförmige Aufnahme für das Dichtungsprofil für die Kofferraumhaube 9 auf.

Beide Heckabschlußteile 11, 12 sind vorzugsweise Preßteile, d.h. Heckbleche, die aus Gewichtsgründen auch aus Aluminiumblech bestehen können. Sie sind vorzugsweise zu einem Schraub-Teilmodul mechanisch verbunden, der mit den Heckseitenteilen 13 verschraubbar ist. Im Fall von Stahlblechteilen erfolgt die mechanische Verbindung vorzugsweise durch Punktschweißen.

Die beiden Heck-Seitenteile 13 bilden einen weiteren Teilmodul des Untermoduls "Heckmittelstück". Sie sind jeweils mit dem Heckabschnitt 13 a, der eine Aufnahme 13 c für die Profildichtung des Kofferraumrandes aufweist, mit den hochstehenden Verbindungsabschnitten 12 c des inneren Heckabschlußteiles 12 verschraubbar, und besitzen auf dem Seitenabschnitt 13 b Verbindungsleisten 13 d für eine Schraubverbindung mit den Kotflügeln, die eine Schraubleiste 6 b besitzen. Sie weisen ferner Ausnehmungen 13 e für die Aufnahme der Heckleuchten auf. Auch die Heck-Seitenteile sind vorzugsweise Preßteile, vorzugsweise aus Aluminiumblech. Aber auch geformte Kunststoffteile können für die Teilmodule 11, 12 und 13 Anwendung finden.

Bei der Fertigung des Fahrzeuges werden vorzugsweise die Teilmodule 11/12 und 13 vormontiert, d.h. zusammengeschraubt und mit den Heckleuchten sowie dem Kofferraumschloß versehen, um dann als Ganzes, d.h. als Heckmittelstück-Untermodul 10 mit der Karosserie verschraubt zu werden. Dabei ist es auch denkbar, den Stoßfänger-Untermodul 1 mit dem Heckmittelstück-Untermodul 10 zu dem erfindungsgemäßen Heckmodul zu verbinden, der in Fig. 3 im Endzustand dargestellt ist. Im Crash-Fall mit hoher Deformationstiefe kann dann der gesamte Heckmodul nach Fig. 3 geschlossen ohne aufwendige Schweiß- und Richtarbeiten ausgetauscht werden. Vorteilhafter ist es jedoch, die beiden Untermodule 1 und 10 zerstörungsfrei lösbar miteinander zu verbinden, damit bei Unfällen, bei denen das Heckmittelstück unbeschädigt bleibt, nur der Stoßfänger-Untermodul 1 ausgewechselt werden muß.

Es versteht sich, daß die dargestellte Heckmodulstruktur nur ein Ausführungsbeispiel für einen bestimmten Wagentyp ist. Bei anderen Wagentypen ist die konstruktive Gestaltung unter Typ-Anpassung entsprechend.

## Patentansprüche

1. Heckmodul für Personenkraftfahrzeuge, deren Karosserie zwei Längsträger (5) und ein Heck mit einem Heckmittelstück aufweist, an die ein hinterer Stoßfängerbiegeträger (2) über Deformationselemente (4) zur Energieabsorption im Bereich der hinteren Längsträger (5) schraubbar ist, **dadurch gekennzeichnet, daß** das Heckmodul aus zwei durch Schraubmontage auswechselbaren Untermodulen besteht, einem ersten Untermodul (1), bestehend aus dem hinteren Stoßfängerbiegeträger (2) mit den Deformationselementen (4), und einem zweiten Untermodul (10), das aus dem aus der Rohbaukarosse herausgelöstem Heckmittelstück besteht, welches als Ganzes oder in Teilen mit der verbleibenden Rohbaukarosse verschraubbar ausgebildet ist, wobei das zweite Untermodul (10) aus einem Teilmodul,bestehend aus einem äußeren und einem inneren mittleren Heckabschlussteil (11, 12),und einem Teilmodul aus zwei sich jeweils an den Enden der mittleren Heckabschlussteile anschließenden Heckseitenteilen (13) besteht, und die beiden Teilmodule Fortsätze (12 c) und Lochleisten für eine Schraubverbindung der Teilmodule untereinander haben.

2. Heckmodul nach Anspruch 1, **dadurch gekennzeichnet, daß** es als eine Vormontageeinheit mit vormontierten Fahrzeugkomponenten ausgebildet ist.

3. Heckmodul nach Anspruch 2, **dadurch gekennzeichnet, daß** die vormontierten Fahrzeugkomponenten die Heckleuchten und das Heckdeckel-Schloß sind.

4. Heckmodul nach einem der Ansprüche 1 bis 3, **dadurch gekennzeichnet, daß** der Untermodul (10) Heckmittelstück mit dem Untermodul (1) Stoßfängerbiegeträger (2) und Deformationselemente (4) zu einem in Gänze wechselbaren Gesamt-Schraubmodul kombiniert ist.

5. Heckmodul nach einem der Ansprüche 1 bis 3, **dadurch gekennzeichnet, daß** der Untermodul (10) Heckmittelstück und der Untermodul (1) Stoßfängerbiegeträger und Deformationselemente als getrennt auswechselbare Schraubmodule ausgebildet sind.

6. Heckmodul nach Anspruch 1, **dadurch gekennzeichnet, daß** die beiden Heckseitenteile (13) zwei zueinander abgewinkelte Abschnitte als integrierte Seitenmulden besitzen, einen rückwärtigen Abschnitt (13 a) und einen kotflügelseitigen Abschnitt (13 b), wobei der rückwärtige Abschnitt (13 a) jeweils eine Lochleiste für die Schraubverbindung mit dem Teilmodul Heckabschlußteil (11, 12) und der kotflügelseitige Abschnitt (13 b) eine Lochleiste (13 c) für eine Schraubverbindung mit dem jeweiligen Kotflügel besitzt.

7. Heckmodul nach Anspruch 1 oder 6, **dadurch gekennzeichnet, daß** die Heckseitenteile (13) Ausnehmungen (13 e) für die Aufnahme der Heckleuchten hat.

8. Heckmodul nach einem der Ansprüche 1 bis 7, **dadurch gekennzeichnet, daß** das innere, mittlere Heckabschlußteil (12) eine Aufnahme (12 b) für das Kofferraumhaubenschloß besitzt.

9. Heckmodul nach einem der Ansprüche 1 bis 8, **dadurch gekennzeichnet, daß** das äußere, mittlere Heckabschlußteil (11) einen nach innen abgewinkelten Abschnitt (11 c) für die teilweise Aufnahme des Untermoduls (1) Stoßfängerbiegeträger (2) mit Deformationselementen (4) sowie an beiden Enden jeweils eine Befestigungsfläche (11 a) für eine Schraubverbindung mit den Längsträgern (5) hat.

10. Heckmodul nach einem der Ansprüche 1 bis 9, **dadurch gekennzeichnet, daß** die Untermodule (1, 10) Preßteile aus Stahlund/oder Aluminiumblech aufweisen.

11. Heckmodul nach Anspruch 10, **dadurch gekennzeichnet, daß** die Untermodule (1, 10) teilweise Komponenten aus Kunststoff aufweisen.

## Claims

1. A rear-end module for passenger motor vehicles the body of which has two longitudinal beams (5) and a rear-end with a rear-end centre piece, to which vehicle body a rear bumper flexural member (2) can be bolted *via* deformation elements (4) for absorbing energy in the region of the rear longitudinal beams (5), **characterised in that** the rear-end module consists of two sub-modules which are replaceable by virtue of bolt mounting, a first sub-module (1), consisting of the rear bumper flexural member (2) with the deformation elements (4), and a second sub-module (10) which consists of the rear-end centre piece separated from the body shell and which is constructed to be boltable in its entirety or in parts to the remainder of the body shell, wherein the second sub-module (10) consists of a partial module, consisting of an outer and an inner central rear-end closure panel (11, 12), and of a partial module consisting of two rear-end side panels (13) each adjoining a respective end of the central rear-end closure panels, and the two partial modules have extensions (12c) and strips with holes for bolting the partial modules to one another.

2. A rear-end module according to claim 1, **characterised in that** it is constructed as a pre-assembled unit with pre-assembled vehicle components.

3. A rear-end module according to claim 2, **characterised in that** the pre-assembled vehicle components are the tail lights and the rear lid lock.

4. A rear-end module according to any one of claims 1 to 3, **characterised in that** the sub-module (10) of rear-end centre piece is combined with the sub-module (1) of bumper flexural member (2) and deformation elements (4) to form a complete bolt-on module which can be replaced in its entirety.

5. A rear-end module according to any one of claims 1 to 3, **characterised in that** the sub-module (10) of rear-end centre piece and the sub-module (1) of bumper flexural member and deformation elements are constructed as separately replaceable bolt-on modules.

6. A rear-end module according to claim 1, **characterised in that** the two rear-end side panels (13) have two sections angled with respect to each other forming integrated side cavities, a rear section (13a) and a mudguard-side section (13b), wherein the rear section (13a) has a strip with holes for bolted connection to the partial module of rear-end closure panel (11, 12), and the mudguard-side section (13b) has a strip (13c) with holes for bolted connection to the respective mudguard.

7. A rear-end module according to claim 1 or 6, **characterised in that** the rear-end side panels (13) have openings (13e) for receiving the tail lights.

8. A rear-end module according to either claim 1 or claim 7, **characterised in that** the inner central rear-end closure panel (12) has a recess (12b) for the boot lid lock.

9. A rear-end module according to either claim 1 or claim 8, **characterised in that** the outer central rear-end closure panel (11) has an inwardly angled section (11c) for partially receiving the sub-module (1) of bumper flexural member (2) with deformation elements (4) and has, at both ends, a mounting surface (11a) for bolted connection to the longitudinal beams (5).

10. A rear-end module according to either claim 1 or claim 9, **characterised in that** the sub-modules (1, 10) have stampings made of sheet steel and/or sheet aluminium.

11. A rear-end module according to claim 10, **characterised in that** some of the components of the sub-modules (1, 10) are made of plastics material.

## Revendications

1. Module arrière pour voitures, dont la carrosserie comprend deux longerons (5) et un arrière comprenant une pièce centrale arrière, sur laquelle peut être vissée une poutre sollicitée en flexion de pare-chocs arrière (2) par l'intermédiaire d'éléments de déformation (4) en vue d'une absorption d'énergie dans la zone des longerons arrière (5), **caractérisé en ce que** le module arrière est constitué de deux sous-modules pouvant être remplacés du fait d'un montage à vis, un premier sous-module (1), constitué de la poutre sollicitée en flexion de pare-chocs arrière (2) avec les éléments de déformation (4), et un second sous-module (10), qui est constitué de la pièce centrale arrière détachée de la carrosserie de construction brute, laquelle pièce est conçue dans son ensemble ou en partie de manière à pouvoir être vissée au reste de la carrosserie de construction brute, le second sous-module (10) étant constitué d'un module partiel, constitué de parties de fermeture arrière centrales extérieure et intérieure (11, 12), et d'un module partiel composé de deux parties latérales arrière (13) respectivement raccordées aux extrémités des parties de fermeture arrière centrales, et les deux modules partiels présentant des prolongements (12c) et des baguettes perforées pour un assemblage par vis des modules partiels les uns aux autres.

2. Module arrière selon la revendication 1, **caractérisé en ce qu'**il est conçu comme une unité de prémontage comprenant des composants de véhicule préalablement montés.

3. Module arrière selon la revendication 2, **caractérisé en ce que** les composants de véhicule préalablement montés sont les feux arrière et la serrure de capot arrière.

4. Module arrière selon l'une des revendications 1 à 3, **caractérisé en ce que** le sous-module (10) pièce centrale arrière est combiné au sous-module (1) poutre sollicitée en flexion de pare-chocs (2) et éléments de déformation (4) pour former un ensemble de module entièrement vissé pouvant être remplacé.

5. Module arrière selon l'une des revendications 1 à 3, **caractérisé en ce que** le sous-module (10) pièce centrale arrière et le sous-module (1) poutre sollicitée en flexion de pare-chocs et éléments de déformation sont conçus comme des modules vissés pouvant être remplacés de manière séparée.

6. Module arrière selon la revendication 1, **caractérisé en ce que** les deux parties latérales arrière (13) possèdent deux sections coudées l'une par rapport à l'autre comme cavités latérales intégrées, une section arrière (13a) et une section côté aile (13b), la section arrière (13a) possédant respectivement une baguette perforée pour l'assemblage par vis au module partiel partie de fermeture arrière (11, 12) et la section côté aile (13b) une bague perforée (13c) pour un assemblage par vis à l'aile respective.

7. Module arrière selon la revendication 1 ou 6, **caractérisé en ce que** les parties latérales arrière (13) présentent des évidements (13e) pour le logement des feux arrière.

8. Module arrière selon l'une des revendications 1 à 7, **caractérisé en ce que** la partie de fermeture arrière (12) centrale, intérieure, possède un logement (12b) pour la serrure de capot de coffre à bagages.

9. Module arrière selon l'une des revendications 1 à 8, **caractérisé en ce que** la partie de fermeture arrière centrale extérieure (11) présente une section coudée vers l'intérieur (11c) pour le logement partiel du sous-module (1) poutre sollicitée en flexion de pare-chocs (2) avec des éléments de déformation (4) ainsi que, aux deux extrémités respectives, une surface de fixation (11a) pour un assemblage par vis aux longerons (5).

10. Module arrière selon l'une des revendications 1 à 9, **caractérisé en ce que** les sous-modules (1, 10) comprennent des pièces moulées en tôle d'acier et/ou d'aluminium.

11. Module arrière selon la revendication 10, **caractérisé en ce que** les sous-modules (10) comprennent en partie des composants en matière plastique.
